# FASCICULE DE BREVET EUROPEEN

(11) **EP 1 302 674 B1**
(45) Date de publication et mention de la délivrance du brevet: **25.06.2008**
(21) Numéro de dépôt: 02292433.6
(22) Date de dépôt: 03.10.2002
(51) Int. Cl.: F16B 13/00, F16B 37/12, B25B 13/48, F16B 23/00

(54) **Ensemble d'une cheville d'ancrage et d'une clé pour ancrer la cheville et y visser un écrou de fixation et la clé de l'ensemble sus-cité**
Ankerdübeleinheit mit einem Schlüssel zum Verankern des Dübels und Aufschrauben einer Befestigungsmutter und der Schlüssel des genannten Ganzen
System consisting of an anchor and a key for fastening the anchor and screwing a fixing nut onto it and the key of said system

(30) Priorité: 10.10.2001 FR 0113037
(43) Date de publication de la demande: 16.04.2003
(73) Titulaire: SOCIETE DE PROSPECTION ET D'INVENTIONS TECHNIQUES SPIT, 26501 Bourg-Les-Valence Cédex (FR)
(72) Inventeur: Gauthier, Alain, 07300 Tournon (FR)
(74) Mandataire: Bloch, Gérard

(56) Documents cités:
- DE-A- 3 203 224
- FR-A- 2 645 922
- US-A- 3 742 789
- US-A- 3 832 931
- US-A- 5 529 449

## Description

Le domaine de l'invention est celui de la fixation de pièces de toutes sortes à des matériaux supports friables, du genre des plaques de plâtre entre deux feuilles cartonnées, et qui, à cet effet, nécessitent des chevilles à filetage extérieur de dimension radiale importante et à extrémités à collerette et de perçage et destinées, après leur ancrage, à recevoir un organe classique de fixation de pièce. Une cheville pour matériaux friables de ce type est décrite dans le brevet européen EP 0 165 674.

L'invention concerne plus particulièrement une telle cheville mais qui, au-delà de la collerette de tête, opposée à l'extrémité de perçage, est prolongée par une portion de manchon fileté destinée à recevoir la pièce à fixer et un écrou de fixation de la pièce sur la portion de manchon.

Avec une telle cheville, deux opérations sont donc nécessaires :
- ancrer la cheville dans le matériau récepteur,
- visser l'écrou de fixation sur la portion de manchon fileté.

Ainsi, l'invention concerne un ensemble d'une cheville d'ancrage pour matériau support friable, du type défini ci-dessus, et d'une clé à double fonction agencée pour ancrer la cheville dans le matériau support et fixer une pièce à la cheville, selon la revendication 1.

On notera que US 5 529 449 enseigne une cheville, avec un crochet, entraînée en rotation par empreinte Phillips.

US 3 832 931 enseigne un élément de fixation avec un manchon fileté au-delà d'une collerette.

US 3 742 789 enseigne un assemblage particulier par goujon.

De préférence, la clé est agencée pour assurer une fonction de clé à pipe pour un écrou de fixation.

Dans ce cas, la clé peut comporter, dans le prolongement l'un de l'autre, un fût mâle tourne-vis et un fût femelle tourne-écrou.

Naturellement, la demanderesse entend également protéger la clé en tant que telle.

L'invention sera mieux comprise à l'aide de la description suivante de la cheville d'ancrage et de la clé associée, en référence au dessin annexé, sur lequel
- la figure 1 est une vue en perspective de la cheville d'ancrage ;
- la figure 2 est une vue en perspective éclatée de l'ensemble de la cheville et de la clé en position tourne-vis ;
- la figure 3 est une vue en perspective éclatée de l'ensemble de la cheville et de la clé en position tourne-écrou et
- la figure 4 est une vue de l'ensemble, la clé en position tourne-vis, en coupe axiale selon un plan traversant les échancrures de la collerette de la cheville.

Rappelons, pour commencer, que la cheville de la présente demande emprunte l'essentiel de ses caractéristiques à celle qui est décrite dans le brevet EP 0 165 674.

La cheville 1 est constituée d'un corps 2, cylindrique ou très légèrement tronconique, d'axe 3, sur la paroi duquel est enroulé un filetage (extérieur) 4 de grande profondeur radiale, c'est-à-dire de grand diamètre extérieur ou de crête. Pour fixer les idées, on considèrera qu'un diamètre de crête sensiblement double du diamètre de pied correspond à un filetage de grande profondeur. Dans l'exemple considéré, l'enveloppe extérieure du filetage est sensiblement conique. Aux deux extrémités du corps 2 sont respectivement disposées une collerette de tête 5 et une lame de perçage 6, ici à trois dents, une dent centrale 7 et deux dents périphériques 8, 8'.

La profondeur du filetage 4 dans sa portion adjacente à la lame 6 est naturellement très réduite, pour pouvoir amorcer le vissage de la cheville dans le matériau support 25.

Un alésage axial 9 s'étend à travers le corps 2 et débouche, dans la lame de perçage 6, par un évidemment ouvert 10 en forme de cuvette, ou de cuiller, pour, le cas échéant, après ancrage de la cheville, faciliter la déviation latérale de la lame 6 lorsqu'on fixe la pièce à fixer à l'aide d'un organe, généralement une vis, qui s'étendrait donc à travers l'alésage axial 9 et au-delà de l'évidemment ouvert 10, comme cela est parfaitement expliqué dans EP 0 165 674.

Le filetage 4 est très faiblement écarté de la collerette 5. Quant à la lame de perçage 6, sa largeur est sensiblement égale au diamètre de pied, c'est-à-dire au diamètre du corps 2, de la cheville.

Au-delà de la collerette 5, à l'opposé de la lame de perçage 6, le corps de cheville 2 se prolonge par une portion de manchon fileté 11 à travers lequel s'étend l'alésage axial 9. Dans l'exemple considéré, la longueur axiale de la portion de manchon fileté 11 est comprise entre la moitié et le tiers de celle du corps de cheville 2.

Dans la collerette de tête 5 ont été percées, à partir du bord 12, ici deux échancrures 13, 13' diamétralement opposées, pour l'entraînement en rotation de la cheville.

En effet, et contrairement au procédé d'ancrage exposé dans EP 0 165 674, l'ancrage de la cheville 1 s'effectue à l'aide de la clé 15 qui va maintenant être décrite.

La clé 15 est ici constituée d'un double fût tourne-vis et tourne-écrou. Plus particulièrement, elle comporte un fût mâle 16 tourne-vis hors de la tranche annulaire 17 duquel font saillie, diamétralement opposés, deux ergots 18, 18' destinés à venir en prise dans les deux échancrures 13, 13' de la collerette 5 de la cheville. L'alésage intérieur 19 du fût tourne-vis 16 de la clé 15 est très légèrement supérieur au diamètre extérieur de la portion de manchon fileté 11 de la cheville pour pouvoir emmancher le fût 16 sur la portion de manchon 11 de la cheville 1. Dans le prolongement du fût mâle tourne-vis 16 s'étend un fût femelle tourne-écrou 20, ici sensiblement de même diamètre extérieur. Il s'agit d'un manchon pourvu d'un alésage intérieur 21 à six pans pour venir en prise sur un écrou 22, de forme complémentaire, de fixation d'une pièce sur la cheville 1 après ancrage.

La clé 15 est ainsi agencée pour assurer une fonction de clé à pipe pour l'écrou de fixation 22.

Plus généralement, la clé 15 et la cheville 1 sont conformées de façon complémentaire pour que la clé puisse assurer une fonction de tourne-vis pour la cheville et une fonction de tourne-écrou pour un écrou à visser sur la cheville.

Dans la partie médiane du double fût, la clé comporte une double ailette 23 d'entraînement en rotation de la clé 15 s'étendant grossièrement perpendiculairement à l'axe 24 du double fût.

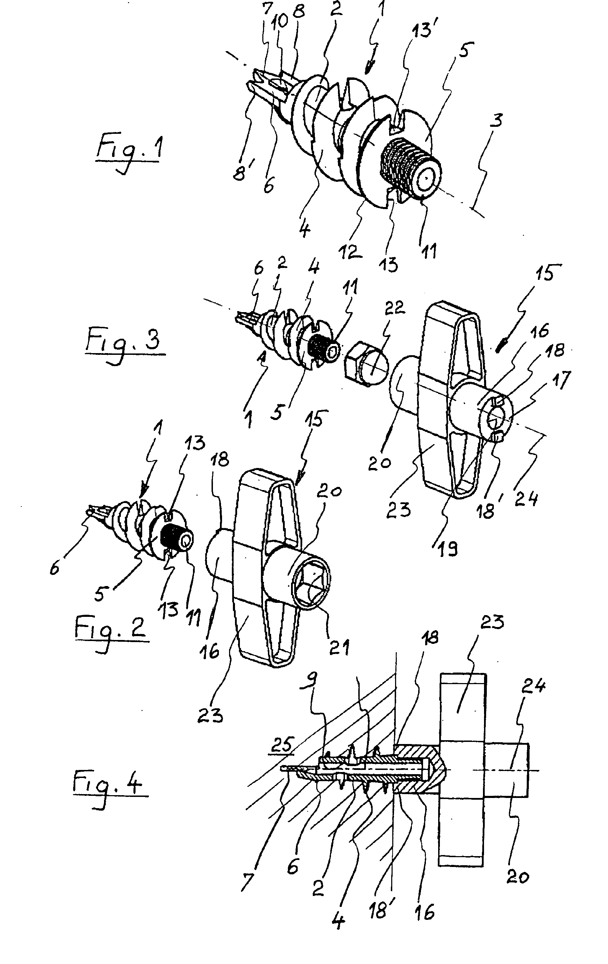

Pour utiliser l'ensemble de cheville d'ancrage et de clé d'entraînement qui vient d'être décrit, on commence par enfoncer la lame de perçage 6 de la cheville 1 dans le matériau récepteur 25 jusqu'à ce que le filetage 4 y pénètre et que le vissage de la cheville soit ainsi amorcé. Puis on glisse le fût tourne-vis 16 de la clé 15 sur la portion de manchon fileté 11 de la cheville jusqu'à introduction der ergots 18, 18' de la clé dans les échancrures 13, 13' de la cheville. Enfin, on tourne la clé 15 à l'aide de la double ailette 23 pour visser la cheville 1 dans le matériau récepteur 25 jusqu'à ce que la collerette de tête 5 vienne s'y plaquer (figure 4). On remarquera qu'on aurait pu ne prévoir qu'un seul ergot et une seule échancrure d'entraînement. Cela n'aurait pas été très fiable. Au contraire, plus de deux paires d'ergot-échancrure, par exemple trois, serait envisageable. On aurait également pu envisager des ergots sur la collerette de la cheville et des échancrures dans la clé d'entraînement, comportant alors deux fûts femelles d'ancrage et de fixation.

On dégage alors la clé 15 de la cheville 1, on glisse la pièce à fixer sur la portion de manchon fileté 11, on coiffe cette portion de manchon fileté 11 de l'écrou 22, on retourne la clé 15, on glisse le fût tourne-écrou 20 sur l'écrou et on tourne la clé 15 à l'aide de la double ailette 23 pour visser l'écrou 22 sur la portion de manchon fileté 11 et fixer ainsi la pièce entre le matériau récepteur et l'écrou 22 vissé sur la cheville 1 ancrée dans le matériau récepteur 25.

## Revendications

1. - Ensemble d'une cheville d'ancrage (1) pour matériau friable, comportant un corps (2) avec une extrémité à collerette (5), une extrémité de perçage (6) et un filetage extérieur (4) de grande profondeur, le corps (2), au-delà de la collerette (5), se prolongeant par une portion de manchon fileté (11) de réception d'un écrou de fixation (22), et d'une clé (15) à double fonction agencée pour ancrer la cheville dans le matériau et visser l'écrou de fixation (22) sur la cheville (1), la cheville (1) et la clé (15) étant conformées de façon complémentaire pour que la clé (15) puisse assurer une fonction de tourne-vis pour la cheville (1), la clé (15) possédant des ergots (18, 18') d'entraînement en rotation et la collerette (5) de la cheville (1) comportant des échancrures (13, 13') de réception des ergots de clé (18, 18'), les ergots (18, 18') étant formés sur un fût mâle tourne-vis (16) de la clé (15), agencé pour s'emmancher sur la portion de manchon fileté (11) de la cheville (1) par un alésage intérieur (19) très légèrement supérieur au diamètre extérieur de la portion de manchon fileté (11).

2. - Ensemble selon la revendication 1, dans lequel la clé (15) est agencée pour assurer une fonction de clé à pipe pour l'écrou de fixation (22).

3. - Ensemble selon l'une des revendications 1 et 2, dans lequel la clé (15) comporte, dans le prolongement du fût mâle tourne-vis (16), un fût femelle (20) tourne-écrou.

4. - Cheville d'ancrage (1) pour l'ensemble de la revendication 1,
laquelle est **caractérisée par le fait que**
le corps (2), au-delà de la collerette (5), qui se prolonge par une portion de manchon fileté (11) de réception de l'écrou de fixation (22), est de diamètre légèrement inférieur à celui intérieur du fût tourne-vis de la clé.

5. - Clé à double fonction (15) pour l'ensemble de la revendication 1,
**caractérisée en ce que**
le fût mâle tourne-vis à ergots (16) de la clé (15), est agencé pour s'emmancher sur la portion de manchon fileté (11) de la cheville (1) par un alésage intérieur (19) très légèrement supérieur au diamètre extérieur de la portion de manchon fileté (11).

## Claims

1. System consisting of: an anchor (1) for friable material, comprising a body (2) with a collar end (5), a cutting end (6) and a deep outside thread (4), the body (2), beyond the collar (5), being continued by a threaded sleeve portion (11) for receiving a fixing nut (22); and a dual-function key (15) for fastening the anchor in the material and screwing the fixing nut (22) onto the anchor (1); the anchor (1) and the key (15) being complementary in shape so that the key (15) can function as a screwdriver for the anchor (1), the key (15) having rotary driving pegs (18, 18') and the collar (5) of the anchor (1) comprising slots (13, 13') for receiving the pegs (18, 18') of the key, and the pegs (18, 18') being formed on a male screwdriver shank (16) of the key (15) designed to fit around the threaded sleeve portion (11) of the anchor (1) by virtue of an internal bore (19) that is very slightly larger than the outside diameter of the threaded sleeve portion (11).

2. System according to Claim 1, in which the key (15) is designed to act as a socket wrench for the fixing nut (22).

3. System according to either of Claims 1 and 2, in which the key (15) comprises a female nut driver shank (20) extending from and coaxial with the male screwdriver shank (16).

4. Anchor (1) for the system of Claim 1, where said anchor is **characterized in that** the body (2), beyond the collar (5), which is continued by a threaded sleeve portion (11) for receiving the fixing nut (22) has a diameter very slightly smaller than the inside diameter of the screwdriver shank of the key.

5. Dual-function key (15) for the system of Claim 1, **characterized in that** the male peg-type screwdriver shank (16) of the key (15) is designed to fit around the threaded sleeve portion (11) of the anchor (1) by virtue of an internal bore (19) that is very slightly larger than the outside diameter of the threaded sleeve portion (11).

## Patentansprüche

1. Anordnung aus einem Verankerungsdübel (1) für brüchiges Material, der einen Körper (2) mit einem Ende (5) mit Kranz, einem Ende (6) mit Durchlochung und einem Außengewinde (4) mit großer Tiefe enthält, wobei der Körper (2) jenseits des Kranzes (5) durch einen Gewindehülsenabschnitt (11) für die Aufnahme einer Befestigungsmutter (22) verlängert ist, und aus einem Schlüssel (15) mit Doppelfunktion, der dazu ausgelegt ist, den Dübel in dem Material zu verankern und die Befestigungsmutter (22) auf den Dübel (1) zu schrauben, wobei der Dübel (1) und der Schlüssel (15) komplementär aneinander angepasst sind, damit der Schlüssel (15) eine Schraubendrehfunktion für den Dübel (1) sicherstellen kann, wobei der Schlüssel (15) Ansätze (18, 18') für den rotatorischen Antrieb besitzt und der Kranz (5) des Dübels (1) bogenförmige Ausschnitte (13, 13') für die Aufnahme der Schlüsselansätze (18, 18') besitzt, wobei die Ansätze (18, 18') an einem Schraubendreh-Steckschaft (16) des Schlüssels (15) ausgebildet sind, der dazu ausgelegt ist, an dem Gewindehülsenabschnitt (11) des Dübels (1) durch ein Innengewinde (19), das sehr wenig größer als der Außendurchmesser des Gewindehülsenabschnitts (11) ist, anzusetzen.

2. Anordnung nach Anspruch 1, wobei der Schlüssel (15) dazu ausgelegt ist, eine Steckschlüsselfunktion für die Befestigungsmutter (22) sicherzustellen.

3. Anordnung nach einem der Ansprüche 1 und 2, wobei der Schlüssel (15) in der Verlängerung des Schraubendreh-Steckschafts (16) einen Mutterndreh-Buchsenschaft (20) enthält.

4. Verankerungsdübel (1) für die Anordnung nach Anspruch 1, **dadurch gekennzeichnet, dass** der Körper (2) jenseits des Kranzes (5), der durch einen Gewindehülsenabschnitt (11) für die Aufnahme der Befestigungsmutter (22) verlängert ist, einen Durchmesser besitzt, der etwas kleiner als der Innendurchmesser des Schraubendrehschafts des Schlüssels ist.

5. Schlüssel mit Doppelfunktion (15) für die Anordnung nach Anspruch 1, **dadurch gekennzeichnet, dass** der Schraubendreh-Steckschaft mit Ansätzen (16) des Schlüssels (15) dazu ausgelegt ist, auf dem Gewindehülsenabschhitt (11) des Dübels (1) über ein Innengewinde (19), das sehr wenig größer als der Außendurchmesser des Gewindehülsenabschnitts (11) ist, angesetzt zu werden.
